# FASCICULE DE BREVET EUROPEEN

(11) **EP 3 671 280 B1**
(45) Date de publication et mention de la délivrance du brevet: **07.04.2021**
(21) Numéro de dépôt: 19214910.2
(22) Date de dépôt: 10.12.2019
(51) Int. Cl.: G01S 19/53, H04N 5/372, B64G 3/00, G01S 5/16, G01S 3/784, G02B 23/00, G02B 26/04

(54) **SYSTÈME DE DATATION DE GRANDE PRÉCISION DE PASSAGE D'UN OBJET, NOTAMMENT D'UN SATELLITE**
HOCHPRÄZISES DATIERUNGSSYSTEM DER PASSAGE EINES OBJEKTS, INSBESONDERE EINES SATELLITEN
SYSTEM FOR HIGH PRECISION DATING OF MOVEMENT OF AN OBJECT, IN PARTICULAR A SATELLITE

(30) Priorité: 18.12.2018 FR 1873120
(43) Date de publication de la demande: 24.06.2020
(73) Titulaire: Thales, 92400 Courbevoie (FR)
(72) Inventeur: DURAND, Gautier, 06156 Cannes La Bocca Cedex (FR)
(74) Mandataire: Marks & Clerk France

(56) Documents cités:
- FR-A1- 2 962 556
- FR-A1- 3 018 612
- US-A1- 2006 110 007
- US-A1- 2007 096 772
- US-A1- 2011 049 302
- US-A1- 2015 323 305
- THOMAS SCHILDKNECHT: "Optical surveys for space debris", THE ASTRONOMY AND ASTROPHYSICS REVIEW, SPRINGER, BERLIN, DE, vol. 14, no. 1, 9 janvier 2007 (2007-01-09), pages 41-111, XP019471557, ISSN: 1432-0754, DOI: 10.1007/S00159-006-0003-9
- WAWRZASZEK, R. ET AL: "Possible use of the "Pi of the Sky" system in a Space Situational Awareness program", PROCEEDINGS OF SPIE, VOL.7502, PO BOX 10 BELLINGHAM WA 98227-0010 USA, 31 octobre 2014 (2014-10-31), XP040503893, DOI: 10.1117/12.838751

## Description

Le domaine de l'invention est celui de la datation précise de l'observation du passage d'un satellite par un télescope optique. Plus généralement, ce procédé peut s'appliquer à l'observation de tout objet en mouvement dont on cherche à déterminer précisément la datation exacte de passage dans le champ d'observation.

Pour de multiples applications, il est nécessaire de déterminer très précisément non seulement la position d'un satellite dans le ciel mais également la datation exacte de cette position.

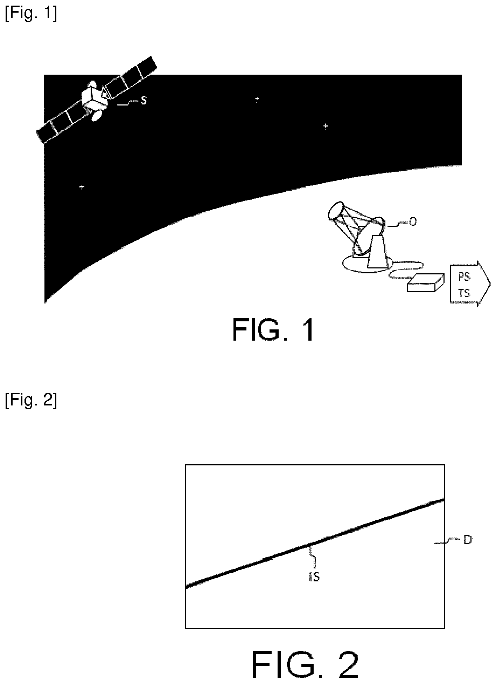

Comme on le voit sur la figure 1, le passage d'un satellite S est détecté par un système optronique terrestre comprenant un télescope O et un détecteur d'images non représenté sur la figure 1. Ce système détermine la datation TS du satellite à un point de passage PS.

La précision de détection angulaire dépend de l'optique du télescope, de la résolution de détecteur d'images et de la précision de positionnement du système optronique dans son ensemble. Les moyens techniques actuels permettent d'assurer une très grande précision de cette détection.

Comme on le voit sur la figure 2 qui représente le détecteur d'images D, l'image du satellite laisse une trace IS sur le détecteur représentée par un trait noir sur cette figure. Cette trace qui a une durée de plusieurs secondes n'est pas datée précisément dans la mesure où ses limites sont mal connues. A titre d'exemple, un satellite qui évolue en orbite basse, réalise un tour de la terre en environ 90 minutes. Sa vitesse de rotation est donc de plusieurs kilomètres par seconde.

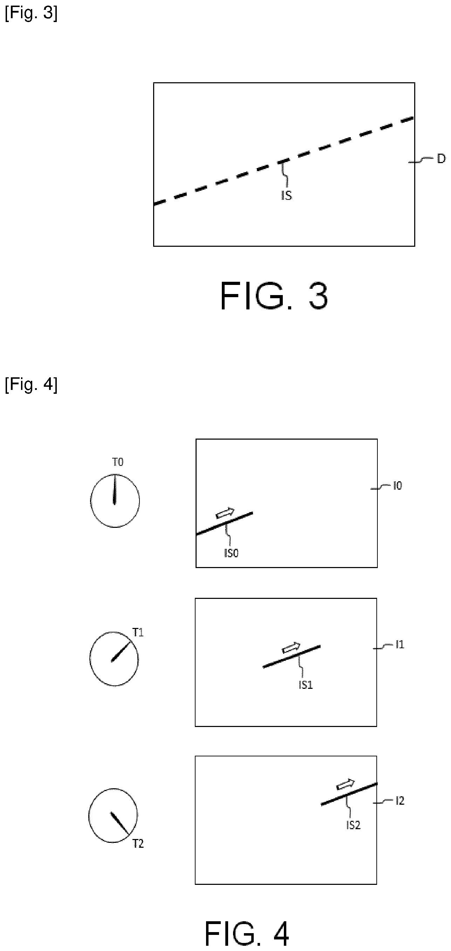

Pour remédier à ce problème, il est possible d'utiliser un obturateur mécanique de haute précision sur la voie optique de réception fonctionnant à grande vitesse dont on connait très précisément les instants d'ouverture et de fermeture. La trace IS laissée par le satellite est en forme de pointillés comme on le voit sur la figure 3 qui représente la trace du satellite sur le détecteur d'images D. Cette méthode a plusieurs inconvénients. La précision des datations, de l'ordre de la milliseconde, reste limitée. Par ailleurs, l'obturateur génère des vibrations, nuisibles à la qualité de l'image et à la précision de pointage du télescope. Enfin, ce type de mécanisme est couteux et a une durée de vie limitée dans la mesure où il est très sollicité.

Une seconde solution illustrée sur la figure 4 consiste à utiliser un capteur « CCD » dit « interligne », l'acronyme « CCD » signifiant « Charge Coupled Device ». Le capteur à transfert interligne comporte une série de photodiodes séparées par des registres verticaux de transfert qui sont recouverts par un blindage optique métallique. Après intégration, la charge générée par les photodiodes est transférée vers les registres verticaux. Le principal avantage du transfert interligne est que le transfert des pixels sensibles aux pixels de stockage est rapide. Il n'est donc pas nécessaire d'obturer la lumière incidente. Il est possible de connaître parfaitement les instants de transfert. On dit que le capteur est à « obturation électronique ».

La figure 4 représente un tel capteur à trois instants différents T0, T1 et T2 correspondant chacun à une ouverture de l'obturation électronique pendant une durée identique, le temps étant représenté par une horloge sur cette figure. Trois images I0, I1 et I2 sont ainsi enregistrées. Le satellite laisse une trace différente IS0, IS1 et IS2 sur chaque image qui peut être datée précisément.

La datation de l'image est précise. Cependant, ce type de capteur interligne a un rendement quantique médiocre et un facteur de remplissage surfacique défavorable, compte-tenu de sa structure, la surface occupée par le blindage optique étant perdue. Enfin, le temps de lecture est long et l'intervalle de temps entre deux images peut être rédhibitoire.

Les documents US 2015/323305 A1, "Optical surveys for space débris" Schildknecht, T.,THE ASTRONOMY AND ASTROPHYSICS REVIEW, SPRINGER, BERLIN, vol. 14, no. 1, "Possible use of the "Pi of the Sky" system in a Space Situational Awareness program", Wawrzaszek, R. et al, SPIE, US 2006/110007 A1, FR 3 018 612 A1, et FR 2 962 556 A1 divulguent d'autres procédés conventionnels de datation et systèmes correspondants.

Les documents US 2011/049302 A1, US 2007/096772 A1 mentionnent des télescopes couplés à une fonction "TDI", mais utilisée de manière différente et à des fins différentes de celles de la présente invention.

Le procédé de datation de passage de satellite par un système comportant un télescope selon l'invention ne présente pas les inconvénients précédents. Il est basé sur une utilisation particulière de capteurs CCD disposant de la fonction « TDI », signifiant « Time Delay Integration ». Plus précisément, l'invention a pour objet un système de datation de passage d'un objet mobile lumineux tel que défini dans la revendication indépendante 1.

Typiquement, le système de datation est un récepteur de signaux temporels issus d'un système de géolocalisation par satellite.

Avantageusement, pendant une période d'ouverture de l'obturateur mécanique, le décalage des charges est réalisé une pluralité de fois selon une fréquence déterminée, déterminant ainsi une pluralité de positions de l'objet mobile à une pluralité d'instants déterminés.

Avantageusement, le nombre de pixels de décalage est fonction de la période d'ouverture de l'obturateur mécanique.

Avantageusement, le nombre de pixels de décalage est d'au moins cinq pixels.

Avantageusement, la période d'ouverture de l'obturateur mécanique est comprise entre une seconde et dix secondes.

Avantageusement, l'objet mobile lumineux est un satellite.

Avantageusement, les données de position et de datation issues du calculateur électronique sont utilisées comme données d'orbitographie du satellite.

Avantageusement, le télescope comportant un système d'asservissement, les données de position et de datation issues du calculateur électronique sont utilisées comme données d'entrée dudit système d'asservissement.

L'invention sera mieux comprise et d'autres avantages apparaîtront à la lecture de la description qui va suivre donnée à titre non limitatif et grâce aux figures annexées parmi lesquelles :
[Fig.1] représente la détection du passage d'un satellite S par un système optronique ;
[Fig.2] représente la trace de ce passage sur le photodétecteur du système optronique ;
[Fig.3] représente un premier mode de datation de ce passage selon l'art antérieur ;
[Fig.4] représente un second mode de datation de ce passage selon l'art antérieur ;
[Fig.5] représente le synoptique d'un système de datation de passage d'un objet mobile selon l'invention ;
[Fig.6] représente l'évolution dans le temps à un premier instant de la trace du passage dudit objet mobile sur le photodétecteur dans un système selon l'invention ;
[Fig.7] représente l'évolution dans le temps à un deuxième instant de la trace du passage dudit objet mobile sur le photodétecteur dans un système selon l'invention ;
[Fig.8] représente l'évolution dans le temps à un troisième instant de la trace du passage dudit objet mobile sur le photodétecteur dans un système selon l'invention ;
[Fig.9] représentent l'évolution dans le temps de la trace du passage dudit objet mobile sur le photodétecteur dans un système selon l'invention.

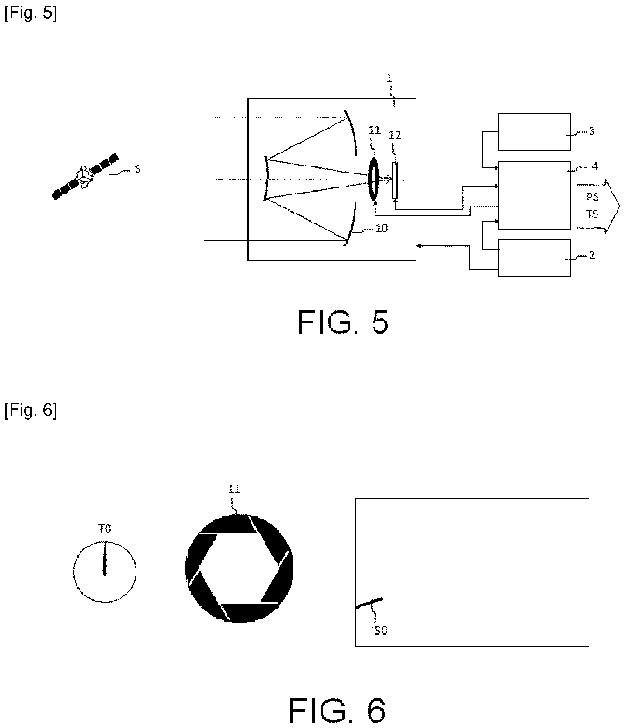

A titre d'exemple non limitatif, la figure 5 représente le synoptique d'un système de datation de passage d'un objet mobile lumineux selon l'invention. L'objet lumineux peut être de différente nature. Cependant, l'application principale est la détection du passage des satellites de façon à déterminer parfaitement les données spatiales et temporelles de leurs orbites.

Le système de datation comporte au moins :
- un télescope 1 ;
- un système de mesure du positionnement 2 dudit télescope ;
- un système de géolocalisation par satellite 3 donnant une référence de temps, et ;
- un calculateur électronique de données 4.

Le télescope comporte une optique de focalisation 10, un obturateur mécanique 11 et une matrice 12 de photoréception disposée au foyer de ladite optique de focalisation. Le télescope peut être de toute nature. Sur la figure 1, à titre d'exemple, il comporte deux miroirs. D'autres configurations optiques sont possibles. Ses caractéristiques d'ouverture, de champ et de résolution sont adaptées à l'objet à détecter et à la précision attendue.

La matrice 12 est un capteur « CCD », acronyme de « Charge Coupled Device ». Elle est composée de pixels organisés en lignes et en colonnes. Là encore, ses caractéristiques de résolution, de sensibilité et de dynamique sont adaptées à l'objet à détecter et aux performances du télescope. Cette matrice comporte la fonction appelée « Décalage Temporel et Intégration » ou « TDI ». Cette fonction permet de transférer les charges électriques présentes dans un pixel au pixel de la même colonne. Le principal intérêt de ce transfert est qu'il est ainsi possible de cumuler dans un pixel unique les charges issues d'un objet mobile dont l'image se déplace sur les pixels d'une même colonne. Mais, dans le cadre du dispositif selon l'invention, ce transfert n'est pas utilisé à des fins de cumul mais afin de marquer un décalage de pixels sur l'image et notamment sur la trace du mobile qu'elle contient. Le temps de transfert, très précisément caractérisé, peut être très rapide, de l'ordre de quelques nanosecondes ou de quelques dizaines de nanosecondes.

Le système de mesure de positionnement 2 du télescope permet de déterminer sa position et son orientation avec une très grande précision. Il prend en compte la position statique du support du télescope et la position angulaire de sa monture opto-mécanique. La position angulaire d'une image sur les pixels de la matrice du télescope est également parfaitement connue, à partir des caractéristiques optiques du télescope et des caractéristiques géométriques de la matrice.

Le système de géolocalisation par satellite 3 est du type « GPS », acronyme de « Global Positioning System ». On sait que les références de temps données par les systèmes GPS sont extrêmement précises. La précision est de l'ordre de quelques nanosecondes à quelques dizaines de nanosecondes.

Le calculateur électronique 4 de données comporte différentes fonctions de commande, de contrôle et de calcul. Sa réalisation ne comporte pas de difficultés particulières pour l'homme du métier.

Sa première fonction est de commander l'ouverture et la fermeture de l'obturateur mécanique 11 du télescope, limitant ainsi le temps d'acquisition d'une image sur la matrice de photodétection 12. Sa seconde fonction est de piloter cette matrice de photodétection. En particulier, il assure le décalage des charges d'au moins un pixel des lignes du capteur CCD 12 au moins une fois à un instant parfaitement déterminé par le système de géolocalisation par satellite, décalant d'autant de pixels la trace lumineuse laissée par l'image de l'objet mobile le long d'une colonne de pixels. Généralement, pendant une période d'ouverture de l'obturateur mécanique, le décalage des charges est réalisé une pluralité de fois selon une fréquence déterminée. Par exemple, le décalage des charges peut être réalisé toutes les secondes, le temps d'acquisition étant de cinq secondes. Le nombre de pixels de décalage est fonction de la période d'ouverture de l'obturateur mécanique. A titre d'exemple, le décalage peut être de cinq pixels sur une même colonne.

Les figures 6, 7 et 8 illustrent ce fonctionnement lors du passage d'un satellite dans le champ du télescope. Chacune comporte trois représentations organisées de la façon suivante. La première représentation à gauche de la figure est l'horloge des temps T. La seconde représentation au centre de la figure est la position ouverte ou fermée de l'obturateur 11 aux différents instants T. La troisième représentation à droite de la figure est la trace du satellite IS sur la matrice de photodétection aux différents instants T.

Sur la figure 6, l'obturateur 11 vient d'ouvrir à l'instant T0, la trace du passage du satellite commence sur la troisième représentation.

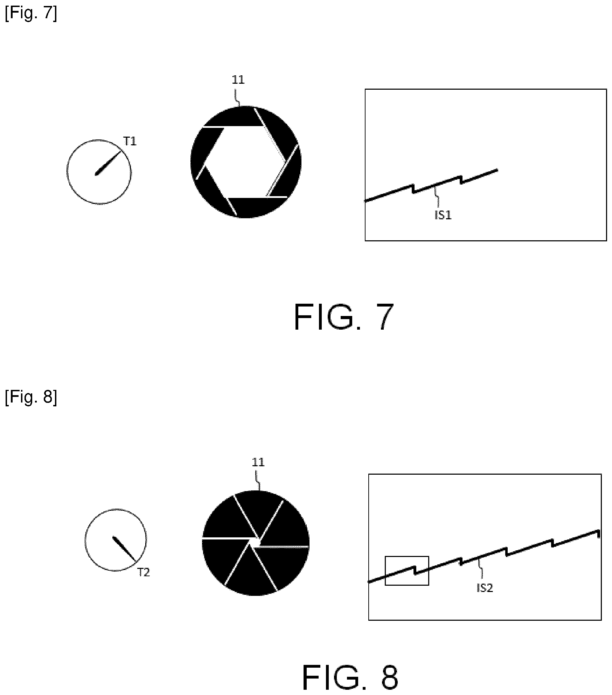

Sur la figure 7, l'instant T1 représenté correspond environ à la moitié du temps d'ouverture de l'obturateur. Le calculateur a déjà déclenché deux fois le décalage des charges des pixels, provoquant l'apparition de deux « dents de scie » dans la trace du passage du satellite.

Sur la figure 8, l'instant T2 représenté correspond à l'instant de fermeture de l'obturateur. Le calculateur a alors déclenché cinq fois le décalage des charges des pixels. Ces cinq dents de scie peuvent alors être exploitées par le calculateur.

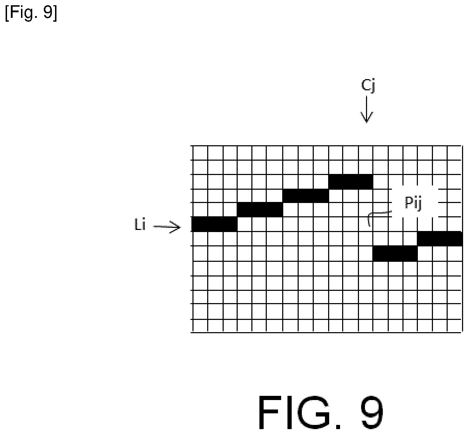

La figure 9 est un agrandissement de la première dent de scie de la figure 8 laissée par le passage du satellite. Cette partie est représentée par un rectangle en traits fins sur la figure 8. La matrice est organisée en lignes Li et en colonnes Cj de pixels Pij. La trace est représentée par des pixels noirs. Sur cette figure 9, le décalage des charges sur les pixels Pij est de cinq pixels.

Le calculateur électronique de données détermine la position du satellite aux instants exacts correspondant aux dents de scie de l'image. L'instant et la position de ces dents de scie est parfaitement connu par le calculateur, compte-tenu des informations temporelles fournies par le système GPS et des informations de position fournies par le télescope et sa matrice de photodétection.

La possibilité de réaliser plusieurs mesures d'une grande précision sur une seule et même image peut être utile pour vérifier ou compléter ou modifier les données d'orbitographie du satellite.

Elles peuvent également être utilisées comme données d'entrée du système d'asservissement du télescope.

## Revendications

1. Système de datation de passage d'un objet mobile lumineux, ledit système comportant au moins un télescope (1), un système de mesure du positionnement dudit télescope (2), un système (3) de géolocalisation par satellite donnant une référence de temps, un calculateur électronique (4) de données, ledit télescope comportant une optique de focalisation (10), un obturateur mécanique (11) et une matrice de photoréception (12) disposée au foyer de ladite optique de focalisation, ladite matrice étant un capteur « CCD » composée de pixels organisés en lignes et en colonnes comportant la fonction appelée « Décalage Temporel et Intégration » ou « TDI », **caractérisé en ce que**, lorsque l'objet mobile lumineux passe dans le champ du télescope pendant une période d'ouverture de l'obturateur mécanique, le décalage des charges d'au moins un pixel des lignes du capteur CCD assuré par la fonction TDI est réalisé au moins une fois à un instant parfaitement déterminé par le système de géolocalisation par satellite, décalant la trace lumineuse (IS) laissée par l'image de l'objet mobile le long d'une colonne de pixels, le calculateur électronique de données déterminant la position exacte de l'objet mobile à l'instant déterminé en fonction de la connaissance de la position de ce décalage et de la position du télescope.

2. Système de datation selon la revendication 1, **caractérisé en ce que**, pendant une période d'ouverture de l'obturateur mécanique, le décalage des charges est réalisé une pluralité de fois selon une fréquence déterminée, déterminant ainsi une pluralité de positions de l'objet mobile à une pluralité d'instants déterminés.

3. Système de datation selon l'une des revendications précédentes, **caractérisé en ce que** le nombre de pixels de décalage est fonction de la période d'ouverture de l'obturateur mécanique.

4. Système de datation selon la revendication 3, **caractérisé en ce que** le nombre de pixels de décalage est d'au moins cinq pixels.

5. Système de datation selon l'une des revendications précédentes, **caractérisé en ce que** la période d'ouverture de l'obturateur mécanique est comprise entre une seconde et dix secondes.

6. Système de datation selon l'une des revendications précédentes, **caractérisé en ce que** l'objet mobile lumineux est un satellite.

7. Système de datation selon la revendication 6, **caractérisé en ce que** les données de position et de datation issues du calculateur électronique sont utilisées comme données d'orbitographie du satellite.

8. Système de datation selon la revendication 6, **caractérisé en ce que**, le télescope comportant un système d'asservissement, les données de position et de datation issues du calculateur électronique sont utilisées comme données d'entrée dudit système d'asservissement.

## Patentansprüche

1. Datierungssystem der Passage eines beweglichen, leuchtenden Objekts, wobei das System mindestens ein Teleskop (1), ein Messsystem der Positionierung des Teleskops (2), ein System (3) zur Geolokalisierung über Satelliten, welches eine Zeitreferenz gibt,einen elektronischen Datenrechner (4) umfasst, wobei das Teleskop eine Fokussierungsoptik (10), eine mechanische Blende (11) und eine Lichtempfangsmatrix (12) umfasst, welche im Fokus der Fokussierungsoptik angeordnet ist, wobei die Matrix ein "CCD"-Sensor ist, bestehend aus Pixeln, welche in Zeilen und Spalten angeordnet sind, welche die Funktion umfassen, genannt "Zeitverschiebung und Integration" oder "TDI", **dadurch gekennzeichnet, dass** das bewegliche leuchtende Objekt das Feld des Teleskops während eines Öffnungszeitraums der mechanischen Blende passiert, wobei die Verschiebung der Ladungen mindestens eines Pixels der Zeilen des CCD-Sensors, welche durch die TDI-Funktion gewährleistet wird, mindestens einmal zu einem durch das Geolokalisierungssystem über Satelliten einwandfrei bestimmten Zeitpunkt bewerkstelligt wird, wodurch die Leuchtspur (IS), welche durch das Bild des beweglichen Objekts entlang einer Pixelspalte hinterlassen wird, verschoben wird, wobei der elektronische Datenrechner die genaue Position des beweglichen Objekts zu dem bestimmten Zeitpunkt in Abhängigkeit von der Kenntnis der Position dieser Verschiebung und der Position des Teleskops bestimmt.

2. Datierungssystem nach Anspruch 1, **dadurch gekennzeichnet, dass** während eines Öffnungszeitraums der mechanischen Blende die Verschiebung der Ladungen mehrfach entsprechend einer bestimmten Frequenz bewerkstelligt wird, wodurch eine Vielzahl von Positionen des beweglichen Objekts zu einer Vielzahl von bestimmten Zeitpunkten bestimmt wird.

3. Datierungssystem nach einem der vorhergehenden Ansprüche, **dadurch gekennzeichnet, dass** die Anzahl der Verschiebungspixel vom Öffnungszeitraum der mechanischen Blende abhängt.

4. Datierungssystem nach Anspruch 3, **dadurch gekennzeichnet, dass** die Anzahl der Verschiebungspixel mindestens fünf Pixel beträgt.

5. Datierungssystem nach einem der vorhergehenden Ansprüche, **dadurch gekennzeichnet, dass** der Öffnungszeitraum der mechanischen Blende zwischen einer Sekunde und zehn Sekunden beträgt.

6. Datierungssystem nach einem der vorhergehenden Ansprüche, **dadurch gekennzeichnet, dass** das bewegliche leuchtende Objekt ein Satellit ist.

7. Datierungssystem nach Anspruch 6, **dadurch gekennzeichnet, dass** die Positionsdaten und die Datierungsdaten, welche aus dem elektronischen Rechner stammen, als Bahnbestimmungsdaten des Satelliten verwendet werden.

8. Datierungssystem nach Anspruch 6, **dadurch gekennzeichnet, dass**, da das Teleskop ein Nachführungssystem umfasst, die Positionsdaten und die Datierungsdaten, welche aus dem elektronischen Rechner stammen, als Eingangsdaten des Nachführungssystems verwendet werden.

## Claims

1. A system for dating the passage of a movable light object, said system comprising at least one telescope (1), a system (2) for measuring the position of said telescope, a satellite geolocation system (3) providing a time reference, an electronic data computer (4), said telescope comprising a focusing optic (10), a mechanical shutter (11) and a photoreception matrix (12) disposed at the focal point of said focusing optic, said matrix being a "CCD" sensor made up of pixels organised in rows and columns comprising the function called "Time and Integration Shift" or "TIS", **characterised in that**, when the movable light object enters the field of the telescope during an opening period of the mechanical shutter, the shift of the charges of at least one pixel of the rows of the CCD sensor provided by the TIS function is carried out at least once at an instant that is fully determined by the satellite geolocation system, shifting the light trace (IS) left by the image of the movable object along a column of pixels, with the electronic data computer determining the exact position of the movable object at the determined instant as a function of the knowledge of the position of this shift and of the position of the telescope.

2. The dating system according to claim 1, **characterised in that**, during an opening period of the mechanical shutter, the shift of the charges is carried out several times at a determined frequency, thus determining a plurality of positions of the movable object at a plurality of determined instants.

3. The dating system according to one of the preceding claims, **characterised in that** the number of shift pixels is a function of the opening period of the mechanical shutter.

4. The dating system according to claim 3, **characterised in that** the number of shift pixels is at least five pixels.

5. The dating system according to one of the preceding claims, **characterised in that** the opening period of the mechanical shutter ranges between one second and ten seconds.

6. The dating system according to one of the preceding claims, **characterised in that** the movable light object is a satellite.

7. The dating system according to claim 6, **characterised in that** the position and dating data originating from the electronic computer are used as orbitography data of the satellite.

8. The dating system according to claim 6, **characterised in that**, with the telescope comprising a control system, the position and dating data originating from the electronic computer are used as input data for said control system.
